(19) Europäisches Patentamt / European Patent Office / Office européen des brevets

(11) **EP 4 071 202 A1**

(12) **EUROPEAN PATENT APPLICATION**
published in accordance with Art. 153(4) EPC

(43) Date of publication:
**12.10.2022 Bulletin 2022/41**

(21) Application number: **20897480.8**

(22) Date of filing: **03.09.2020**

(51) International Patent Classification (IPC):
**C08J 3/22** (2006.01)   **C08J 3/20** (2006.01)
**C08K 5/103** (2006.01)   **C08L 23/14** (2006.01)

(52) Cooperative Patent Classification (CPC):
**C08J 3/20; C08J 3/22; C08K 5/103; C08L 23/14**

(86) International application number:
**PCT/JP2020/033380**

(87) International publication number:
**WO 2021/111689 (10.06.2021 Gazette 2021/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.12.2019 JP 2019217878**

(71) Applicant: **Toyo Seikan Group Holdings, Ltd.**
**Shinagawa-ku**
**Tokyo 141-8627 (JP)**

(72) Inventors:
• **MURAKAMI, Takuo**
  **Yokohama-shi, Kanagawa 240-0062 (JP)**
• **AKUTSU, Yosuke**
  **Yokohama-shi, Kanagawa 240-0062 (JP)**

(74) Representative: **J A Kemp LLP**
**80 Turnmill Street**
**London EC1M 5QU (GB)**

(54) **PROPYLENE RESIN MASTERBATCH**

(57) A master batch includes a matrix resin containing a propylene-based resin and a non-volatile liquid with a boiling point of 200°C or higher dispersed in the matrix resin. Temperature conditions represented by the relationships below are satisfied:
$Tm < 159°C$,
$Tc \geq 97°C$, and
$Tm - Tc < 49°C$
where Tc is a crystallization temperature indicated, in DSC measurement, as a peak top temperature of an exothermic peak observed on a highest temperature side when cooled to -50°C at a temperature lowering speed of 10°C/min after heat treatment for 5 minutes at 200°C and Tm is a melting point indicated, in the DSC measurement, as a peak top temperature of a melting peak observed on a highest temperature side when heated from -50°C to 200°C at a temperature rising speed of 10°C/min after being cooled.

EP 4 071 202 A1

**Description**

Technical Field

The present invention relates to a propylene-based resin master batch and more particularly relates to a propylene-based resin master batch containing a non-volatile liquid with a boiling point higher than 200°C.

Background Art

Plastic containers are easily molded and cheap to manufacture. Because of this, plastic containers are widely used for a variety of purposes. Polyethylene, polypropylene, and other olefin-based resins are preferably used when molding bottles and the like for containing viscous slurry-like or paste-like content such as ketchup.
Regarding bottles and the like for containing viscous content, to quickly discharge the content or to allow all of content to be used without leaving any remaining, containers are more likely to be stored in an inverted state. Thus, containers preferably have the property where the viscous content quickly moves down without adhering to the inner surface of the container when the container is inverted.
To satisfy such a requirement, as described in Patent Document 1, a known method of improving the flowability of the content in the container is used in which a solid lubricant of aliphatic amide or the like is blended in the inner surface of a resin forming the container inner surface and the lubricant bleeds on the container inner surface.
However, as described in Patent Document 2, a method of forming a liquid layer different from the content on an inner surface that comes into contact with the content has been garnering attention. In such a technique, a liquid layer formed of a liquid immiscible with the content is formed on the inner surface of the container to greatly enhance the slipperiness with respect to the content as compared with that of known techniques. This allows the content to be quickly discharged out from the container without adhering to the container inner wall and without leaving any content remaining when the container is inverted or tilted.
A method of modifying a surface property such as slipperiness by forming a liquid layer on a surface is not limited in application to a container and may be applied to an molded article with the form of a film or the like, and the properties of the surface can be significantly modified by appropriately selecting the type of liquid.
With the method of forming a liquid layer on the surface of an molded article such as a container and modifying the surface property as described above, the liquid layer is formed by, for example, dipping or spraying the liquid that is different from the content on the inner surface of the container after the container is molded. However, in this case, a particular processing process for forming the liquid layer is necessary, which is disadvantageous from the perspective of productivity. Because of this, a method has been looked into in which a liquid for forming the liquid layer is mixed with a resin for forming the container inner surface, the resin composition in which the liquid is mixed is used to mold the molded article, and a liquid layer is formed on the surface of the molded article via bleeding of the liquid after molding. That is, after molding, the liquid contained in the resin composition segregates on the inner surface of the container, automatically forming a liquid layer on the surface.
In a case where a container is molded using such a liquid-containing resin composition (the liquid may also be referred to as a lubricating liquid), naturally from an industrial perspective, a master batch in a pellet form in which the lubricating liquid is blended with the molding resin is used. In other words, the lubricating liquid and the molding resin are mixed together and a resin composition is prepared every time, and this reduces the efficiency and requires a tank or the like for housing a large amount of lubricating liquid. Accordingly, a pelletshaped master batch containing a high concentration of the lubricating liquid is prepared in advance, and the lubricating liquid in the form of the master batch is handled for storage, transportation, or the like. Because of this, for molding, the master batch is diluted by the molding resin, the surface-molding resin composition is prepared, and a container or the like is molded.
Thus, a problem regarding the bleedability of the lubricating liquid from the master batch can arise. That is, in a case where the liquid contained in the master batch has a low concentration (for example, 20 mass% or less), no problems arise. However, in a case where the liquid contained in the master batch has a high concentration, the liquid may bleed from the master batch, making the pellet sticky and handling difficult, or the concentration of the liquid may end up being less than a target value when diluting the master batch and preparing the resin composition for molding due to the liquid bleeding. This tendency is pronounced in the case where a molding resin that is mixed with a liquid is olefin-based resins, such as polyethylene and polypropylene, used to mold squeeze containers or the like.
Regarding a master batch containing a liquid component, in an example in Patent Document 3, polyglycerol fatty acid esters (liquid component) are added to polyethylene or polypropylene at a 5% concentration, a master batch pellet is made with the extrusion molding machine, and the master batch pellet is extruded after mixed with a resin pellet of polyethylene or polypropylene to mold a film. However, in Patent Document 3, because the concentration of the polyglycerol, which is the liquid component, is only 5%, the resin composition for molding formed from the master batch is also restricted to having a low concentration of the liquid component (1.5% or less in the Examples of Patent Document 4), meaning that a resin composition for molding containing a high concentration of the liquid component cannot be prepared.

In addition, in Patent Document 4, a master batch is described in which from 1 to 30 parts by weight of an antistatic agent and from 0.1 to 1 parts by weight of a nucleating agent are blend with 100 parts by weight of a crystalline thermoplastic resin such as polypropylene, with a nonionic surfactant such as glycerin fatty acid esters used as an example of the antistatic agent. In other words, with the technology of Patent Document 4, the amount of bleeding of the antistatic agent is reduced by the crystallization of the crystalline thermoplastic resin and stickiness caused by bleeding of the antistatic agent is prevented. However, in this technology, the amount of antistatic agent per master batch is approximately 20 mass%, and the amount of bleeding is reduced to only approximately from 7 to 9 mass%. Furthermore, the antistatic agent blended here is used to prevent adhesion of dust and the like. Because it is not used to improve the slipperiness of the fluid substance, a liquid layer is not formed on the surface. That is, for a master batch in which a large amount of antistatic agent is not blended but a large amount of the liquid (lubricating liquid) is blended to form a liquid layer (lubricating layer), further innovation is needed to prevent stickiness.

Furthermore, in Patent Document 5, the present applicants propose a master batch in which a liquid (B) with a viscosity (at 23°C) of 1000 mPa·s or less is dispersed in a matrix resin (A) with a glass transition point of 35°C or higher. The master batch contains a lubricating liquid (liquid (B)) for improving the slipperiness with respect to the fluid substance and uses a matrix resin (A) with a high glass transition point. Because of this, bleeding of the liquid (B) is suppressed and the bleeding suppression effect is very high. However, the matrix resin with a high glass transition point used in Patent Document 5 is a cyclic olefin-based resin, which is extremely expensive, and there is also a disadvantage in that it is not able to be used with an inexpensive propylene-based resin such as standard polypropylene or a copolymer of propylene and α-olefin.

Citation List

Patent Literature

Patent Document 1: JP 2008-222291 A
Patent Document 2: WO 2014/010534
Patent Document 3: JP S43-8605 A
Patent Document 4: JP 2012-72335 A
Patent Document 5: JP 2015-105308 A

Summary of Invention

Technical Problem

Accordingly, an object of the present invention is to provide a liquid-containing master batch in which, even in a case where the contained liquid has a high concentration, bleeding of the liquid is effectively suppressed for an extended period of time.

Another object of the present invention is to provide a liquid-containing master batch in which a liquid is dispersed in an inexpensive propylene-based resin.

Solution to Problem

The present inventors performed a number of experiments relating to liquid-containing master batches and examined the bleeding property. As a result, the present inventors found that when a liquid is blended with a propylene-based resin, many fine spherulites are uniformly produced, allowing bleeding of the liquid to be significantly suppressed and completed the present invention.

According to the present invention, a master batch includes a matrix resin containing a propylene-based resin; and a non-volatile liquid with a boiling point of 200°C or higher dispersed in the matrix resin, wherein temperature conditions represented by relationships below are satisfied

$Tm < 159°C$,
$Tc \geq 97°C$, and
$Tm - Tc < 49°C$

where Tc is a crystallization temperature indicated, in DSC measurement, as a peak top temperature of an exothermic peak observed on a highest temperature side when cooled to -50°C at a temperature lowering speed of 10°C/min after heat treatment for 5 minutes at 200°C, and Tm is a melting point indicated, in the DSC measurement, as a peak top temperature of a melting peak observed on a highest temperature side when heated from -50°C to 200°C at a temperature rising speed of 10°C/min after being cooled.

In the master batch of the present invention, the following aspects are preferably applied.

1. The temperature conditions include a relationship of Tm - Tc < 42°C being satisfied.
2. A nucleating agent is blended in the matrix resin.
3. A propylene-based resin is a copolymer of propylene and an $\alpha$-olefin.
4. The non-volatile liquid is a glycerin fatty acid ester or vegetable oil.
5. 10 parts by mass or greater of the non-volatile liquid is contained per 100 parts by mass of the matrix resin containing the propylene-based resin.
6. A surface bleeding amount of the non-volatile liquid per 1 g of a master batch is 20 mg or less after storage for 60 days in an environment of 60% relative humidity and 22°C.

According to the present invention, a plastic container includes an inner surface formed by a blend of the master batch according to claim 1 and a container-molding resin.

Advantageous Effects of Invention

The master batch of the present invention contains a matrix resin with propylene-based resin as a main component and a non-volatile liquid with a boiling point of 200°C or higher and has an important feature that satisfies temperature conditions represented by the relationships below:

Tm < 159°C,
Tc $\geq$ 97°C, and
Tm - Tc < 49°C (preferably Tm - Tc < 42°C)

where Tm is a melting point, Tc is a crystallization temperature, and these are calculated using DSC measurement. With this, bleeding of a master batch can be effectively suppressed for an extended period of time. In particular, as indicated by the Examples described below, after a master batch containing a large amount, 20 mass%, of a non-volatile liquid is stored for 60 days, the amount of bleeding per 1 g of the master batch is kept to 20 mg or less. Accordingly, stickiness caused by the liquid bleeding can be prevented and, when a predetermined resin is blended with the master batch to form a molding resin, the amount of liquid in the molding resin can be stably maintained, allowing modifications using the liquid to be performed as planned.

That is, in the present invention, the master batch satisfying the temperature conditions described above and also satisfying Tm - Tc < 42°C means that when the nucleating agent is blended in the propylene-based resin and the matrix resin containing the propylene-based resin and the non-volatile liquid are melt-kneaded and cooled, many fine spherulites are uniformly produced, and because the dissolved non-volatile liquid is trapped in the amorphous portions between the spherulites due to the many fine spherulites, the bleeding is effectively suppressed.

Brief Description of Drawings

FIG. 1 is a polarized photomicrograph using crossed Nicols illustrating the crystal state of a center cross-section of a master batch according to Example 1 that satisfies the temperature conditions as observed using DSC according to the present invention.
FIG. 2 is a polarized photomicrograph using crossed Nicols illustrating the crystal state of a center cross-section of a master batch according to Comparative Example 1 that does not satisfy the temperature conditions as observed using DSC according to the present invention.

Description of Embodiments

The master batch of the present invention contains, as essential components, a matrix resin and a liquid with a high boiling point dispersed in the matrix resin.

Liquid with High Boiling Point

When the master batch is mixed with a molding resin and an molded article is produced, the liquid with a high boiling point to be dispersed in the matrix resin precipitates on the molded article surface and forms a liquid layer. This liquid layer gives the surface of the molded article a surface property corresponding to the type of liquid. Accordingly, the liquid naturally has a boiling point of 200°C or higher, for example, so that the liquid does not volatilize at atmospheric pressure and is selected according to the surface property to be given to the molded article surface.

For example, to impart water repellency, the liquid is selected from silicone oil, glycerin fatty acid esters, vegetable oil (or edible fat and oil), and the like.

In addition, to impart oil repellency, highly hydrophilic ionic liquid or the like can be used, and an appropriate liquid may be selected taking into account the use of the molded article.

Furthermore, to increase slipperiness with respect to viscous content in a case where the molded article is a container, a liquid that is immiscible with respect to the content is selected as the liquid to use so that the liquid does not mix with the content. This is because, if the liquid is miscible with respect to the content, the liquid exposed on the container inner surface mixes with the content and falls off the container inner surface, making it difficult to impart the desired surface property.

In particular, in the case of the content including water, such as ketchup, the liquid used is preferably silicone oil, glycerin fatty acid esters, liquid paraffin, vegetable oil, or the like. Among these, medium-chain triglycerides (C6 to C12 being commercially available), glycerin fatty acid esters represented by glycerin trioleate and glycerin diacetomonooleate, and vegetable oil volatilize little and are approved as food additives and are also advantageous in that they are odorless and do not negatively affect the flavor of the content. In particular, the medium-chain fatty acid ester (MCT) is most preferable from the perspective of easily satisfying the temperature condition described above.

Furthermore, in a case of emulsified contents such as mayonnaise, silicone oil, glycerin fatty acid esters, vegetable oil, and the like are preferably used as the liquid with a high boiling point. Among these, a liquid showing a property of emulsifying over a period of time is the most preferable. Among these, liquids with relatively high molecular weight show such a property.

In the present invention, the liquid with a high boiling point described above bleeds such that a liquid layer is formed on the molded article surface when the master batch is diluted with a predetermined molding resin and formed. Thus, the blended amount of the liquid with a high boiling point is preferably large. However, when the blended amount is too large, the effect of the nucleating agent when forming the master batch may be reduced and bleeding of the liquid with a high boiling point from the master batch may not be effectively suppressed. Accordingly, the blended amount of the liquid with a high boiling point is preferably, per 100 parts by mass of the master batch described below, from 10 parts by mass to less than 100 parts by mass, preferably from 20 parts by mass to less than 70 parts by mass, and more preferably from 25 parts by mass to less than 40 parts by mass.

Matrix Resin

In the present invention, a propylene-based resin is used as the matrix resin in which the liquid with a high boiling point described above is dispersed. By using a propylene-based resin as the matrix resin, the crystallinity can be adjusted to satisfy a predetermined temperature condition.

As the propylene-based resin, depending on the use, not only a propylene homopolymer, but also a random copolymer or block copolymer of propylene and ethylene, butene-1, hexene-1, 4-methyl-1-pentene, or another similar linear $\alpha$-olefin can be used. However, from the perspective of crystallinity, the amount of propylene in the copolymer is preferably 90 mol % or greater and more preferably 95 mol % or greater. Furthermore, from the perspective of moldability, the melt flow rate (MFR) (at 230°C) is preferably from 0.1 g/10 min to less than 26 g/10 min and more preferably from 0.3 to 10 g/10 min.

As long as the predetermined temperature conditions can be ensured for differential scanning calorimetry (DSC) measurement, the resin blended with thermoplastic resins other than the propylene-based resin described above can be used as the matrix resin. These other thermoplastic resins are not particularly limited; however, typically an olefin-based resin can be used from the perspective of moldability, for example. Representative examples include copolymers of polyethylene or ethylene and another $\alpha$-olefin. The blend amount is preferably 30 mass% or less in the matrix resin.

In addition, a nucleating agent is required to be blended in the matrix resin to satisfy the predetermined temperature condition. Examples of the nucleating agent include known polypropylene crystal nucleating agents, representative examples including carboxylic acid metal salt types, such as sodium benzoate, aluminum dibenzoate, potassium benzoate, lithium benzoate, and sodium $\beta$ (naphthalate sodium cyclohexanecarboxylate), sorbitol types, such as benzylidene sorbitol and derivatives thereof, and polymer types, such as poly-3-methylbutene-1, polyvinyl cycloalkane, and polyvinyl trialkylsilane.

Note that as the nucleating agent described above, a nucleating agent blended with a propylene-based resin is typically commercially available. Examples of commercially available propylene-based resins including such a nucleating agent include trade name PM931M random polypropylene available from SunAllomer Ltd., trade name EG7FTB random polypropylene available from Japan Polypropylene Corporation, trade name PM731M random polypropylene available from SunAllomer Ltd., and trade name PS320M random polypropylene available from SunAllomer Ltd.

In the present invention, the master batch including the matrix resin described above, the liquid with a high boiling point, and the nucleating agent is required to satisfy the temperature conditions described below relating to the crystallization temperature Tc indicated, in DSC measurement, as the peak top temperature of an exothermic peak observed on the highest temperature side when cooled to -50°C at a temperature lowering speed of 10°C/min after heat treatment for 5 minutes at 200°C and a melting point Tm indicated, in the DSC measurement, as the peak top temperature of a melting peak observed on the highest temperature side when heated from -50°C to 200°C at a temperature rising speed of 10°C/min after being cooled.

The temperature conditions include:

Tm < 159°C,
Tc ≥ 97°C, and
Tm - Tc < 49°C (preferably Tm - Tc < 42°C).

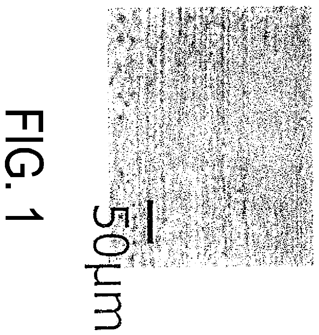

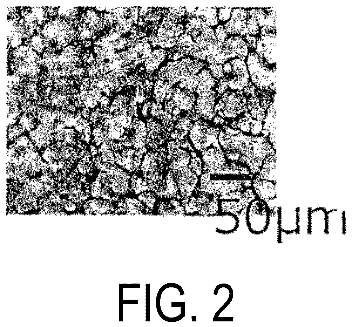

According to the temperature conditions described above, the master batch can be molded at low temperatures (Tm is lower than 159°C, preferably lower than 155°C, and more preferably lower than 150°C), the crystallization temperature Tc is high (Tc is 97°C or higher, preferably 100°C or higher, and more preferably 102°C or higher), and the subcooling level (Tm - Tc) is low (lower than 49°C, preferably lower than 42°C, and more preferably lower than 40°C). Thus, in the cooling process after extrusion, the matrix resin can be crystallized from a higher temperature state because the non-volatile liquid is uniformly finely dispersed in the matrix resin. For example, FIG. 1 is a polarized photomicrograph using crossed Nicols of the center cross-section of a master batch (Example 1) that satisfies the temperature conditions, and FIG. 2 is a polarized photomicrograph using crossed Nicols of a master batch (Comparative Example 1) that does not satisfy the temperature conditions. As will be appreciated by comparing these diagrams, in the master batch that satisfies the temperature conditions described above, many fine spherulites are uniformly produced, and it is thought that the liquid with a high boiling point is contained in the amorphous portion between the spherulites or inside the spherulites. Thus, the amount of bleeding of the liquid with a high boiling point is less than 13.2 mg per 1 g of the master batch (see Example 1). On the other hand, in a master batch that does not satisfy these temperature conditions, rough spherulites are non-uniformly produced, with crack-like amorphous portions forming between the spherulites. From this, it is thought that it is easier for the liquid with a high boiling point present in the amorphous portions to move through the amorphous portions to the master batch surface. As a result, the amount of bleeding of the liquid with a high boiling point is 23.7 mg, which is a significantly large amount (see Comparative Example 1).

In the present invention, the degree of crystallinity of the matrix resin of the master batch including the liquid with a high boiling point and the nucleating agent is preferably as high as possible from the perspective of suppressing bleeding of the liquid. However, if the degree of crystallinity is too high, the proportion of the amorphous portion is decreased, which may cause the saturation solubility of the liquid in the matrix resin to be decreased. Thus, the degree of crystallinity of the matrix resin is from 5% to 60%, preferably from 10% to 50%, more preferably from 15% to 40%, even more preferably from 15% to 35%, yet even more preferably from 20% to 40%, and particularly preferably from 20% to 35%. In the present specification, degree of crystallinity means a value determined from the ratio of the enthalpy of fusion of the matrix resin and the enthalpy of fusion of a perfect crystal of the matrix resin obtained by a differential scanning calorimeter (DSC).

In the present invention, the size of the spherulites in the matrix resin of the master batch including the liquid with a high boiling point and the nucleating agent is preferably as small as possible from the perspective of suppressing bleeding of the liquid and is, for example, 50 μm or less, preferably 30 μm or less, more preferably 10 μm or less, and even more preferably 5 μm or less. The lower limit is not particularly limited, but is preferably 0.1 μm or greater. In the present specification, the size of the spherulites means the average particle size of the spherulites present in the center cross-section of the master batch which can be measured using a polarizing microscope or SEM.

In the present invention, the type and blended amount of the nucleating agent and the type and blended amount of the liquid with a high boiling point are required to be set in a predetermined range according to the propylene-based resin so that the temperature conditions described above are satisfied. For example, although the liquid with a high boiling point is blended at a large amount, if the blended amount is too large, the melting point Tm is reduced and, even though the condition relating to the melting point Tm can be satisfied, the crystallization temperature Tc is also reduced. As a result, the subcooling level (Tm - Tc) is increased and it tends to be difficult to satisfy the conditions. In addition, depending on the type of nucleating agent, it may be necessary to blend a large amount of the nucleating agent to ensure a predetermined crystallization temperature Tc, which may result in the melting point Tm increasing and a negative effect on moldability and processability. Thus, to obtain a master batch satisfying the temperature conditions described above, a preferable method includes blending the liquid with a high boiling point with a commercially available propylene-based resin and producing a master batch, calculating the temperatures Tm, Tc of the master batch via DSC measurement, and adjusting the amount of the liquid with a high boiling point, the type and amount of the nucleating agent, and the like so that the predetermined temperature conditions are satisfied. This method is preferable because typically there are some resin manufacturers that do not make public the type and amount of the nucleating agent blended in the resin.

Master Batch Preparation and Use

The master batch of the present invention described above is manufactured as following: a predetermined amount of the nucleating agent-containing matrix resin described above and the liquid with a high boiling point are fed into the kneading portion of an extruder, for example, and kneaded, then melt extrusion is performed, and the melted extrudate is cut by pelletizers or the like. The master batch is then used as pellets of a predetermined size after being stored, transported, distributed, or the like. In other words, the liquid with a high boiling point bleeding and causing the pellet to be sticky or other problems are effectively prevented from the point in time directly after manufacture until use.

The pellets of the master batch can also be used as two-layer pellets that includes, as a core layer, a nucleating agent-containing matrix resin in which the above-described liquid with a high boiling point is dispersed, as long as the predetermined temperature conditions can be ensured for DSC measurement.

The pellets of this master batch is used to mold a molded article in which a liquid layer of the liquid with a high boiling point (B) is formed on the surface. That is, the master batch pellets are kneaded with a molding resin (diluted resin), a kneaded product containing the liquid with a high boiling point at a predetermined concentration is prepared, and the kneaded product is molded into a predetermined shape to obtain the desired molded article. Additionally, in a case where the molded article has a multilayer structure, the master batch pellets can be used mixed with the molding resin (diluted resin) to not only form the liquid layer on the surface, but to also adjust the concentration of the liquid component in one of the layers in the multilayer structure.

The molding resin that is mixed with the master batch pellet is not particularly limited as long as it can be uniformly mixed with the matrix resin. However, typically, the same type as the olefin-based resin in the matrix resin, such as propylene-based resin or polyethylene, is preferably used. This is because it makes setting the molding conditions easy and allows a molded article that utilizes the properties of the resin to the fullest to be obtained.

Furthermore, the kneading method and the molding method can be selected as appropriate depending on the physical properties (for example, the melt flow rate) of the resin. However, because the liquid is kneaded with the solid matrix resin, the kneading of both is preferably performed by melt-kneading using the kneading portion of a molding machine such as an extruder, and more preferably extrusion molding or extrusion blow molding (direct blow molding) is used as the molding method. This is because with such a method, dispersion of the liquid with a high boiling point in the kneading and molding process can be effectively avoided and also the effects (for example, adhesion of the liquid to the mold and the like) on the molding due to the presence of the liquid with a high boiling point can be ignored.

Such a master batch containing such a propylene-based resin as a main component and the liquid with a high boiling point is suitably used to mold a flexible container such as a squeeze container (direct blow bottle) for squeezing out a viscous content, and when such a flexible container is molded using the master batch of the present invention, the surface property from the liquid layer of the liquid with a high boiling point can be utilized to the fullest. Naturally, the master batch can be applied to molding containers having various forms, such as a cup shape, a bottle shape, a bag shape (pouch), a syringe shape, a pot shape, and a tray shape, and may also be applied to a stretch molded container.

Examples

The excellent properties of the master batch (master pellet) of the present invention are described using the following Examples. Note that the methods of measuring various physical properties, properties, and the like and the manufacturing of the master batch used in the following Examples and the like are as follows.

1. Measurement of Melting Point and Crystallization Temperature

The crystallization temperature Tc and the melting point Tm of the produced master batch were measured using a differential scanning calorimeter (Diamond DSC available from PerkinElmer Co., Ltd).

A sample of 5 mg was inserted into sample pan B0143003/B0143017 (trade name, available from PerkinElmer Co., Ltd). The sample was subjected to heat treatment at 200°C for 5 minutes in a nitrogen atmosphere and then cooled to -50°C at a temperature lowering speed of 10°C/min. The peak top temperature of the exothermic peak observed on the highest temperature side during the temperature lowering process was taken as Tc (°C). Then, after holding the sample at -50°C for 3 minutes, the sample was heated from -50°C to 200°C at a temperature rising speed of 10°C/min. The peak top temperature of the melting peak observed on the highest temperature side during the temperature rising process was taken as Tm (°C).

2. Measurement of Degree of Crystallinity

The degree of crystallinity of the matrix resin was measured using a differential scanning calorimeter (Diamond DSC available from PerkinElmer Co., Ltd).

A sample of 5 mg was inserted into sample pan B0143003/B0143017 (trade name, available from PerkinElmer Co., Ltd). The sample was held at 25°C for 3 minutes in a nitrogen atmosphere and then cooled to -50°C at a temperature lowering speed of 10°C/min. Then, after holding the sample at -50°C for 3 minutes, the sample was heated from -50°C to 200°C at a temperature rising speed of 10°C/min. An enthalpy of fusion ΔH (J/g) of the matrix resin was determined from the peak area of the melting peak observed on the highest temperature side during the temperature rising and the weight of the matrix resin contained in the inserted sample, and the degree of crystallinity was calculated using the following equation.

$$\text{Degree of crystallinity (\%)} = (\Delta H / \Delta H0) \times 100$$

ΔH0 is the enthalpy of fusion of a perfect crystal of the matrix resin, but in Examples 1 to 4 and Comparative Examples 1 to 4, ΔH0 is the enthalpy of fusion of a perfect crystal of the propylene-based resin, and in Examples 5 to 8, ΔH0 is the sum of the values obtained by multiplying the enthalpy of fusion of a perfect crystal of the propylene-based resin and the ethylene-based resin by the weight fraction. Here, the enthalpy of fusion of a perfect crystal of the propylene-based resin was 207 J/g, and the enthalpy of fusion of a perfect crystal of the ethylene-based resin was 293 J/g.

3. Evaluation of Surface Bleed Amount of Master Batch

8 g of a master batch produced by the method described below were placed in a glass jar and stored in an environment of 60% relative humidity (RH) and 22°C for 60 days. 8 g of heptane were added to the glass jar containing the master batch stored over time, the contents of the glass jar were agitated for 10 second, then non-volatile liquid on the master batch surface was extracted. After the extracted liquid was dried at 120°C., the weight of the remaining non-volatile liquid was measured, and the surface bleed amount of the non-volatile liquid per 1 g of the master batch was calculated by dividing the measured weight by the weight of the inserted master batch.

Matrix Resin for Producing Master Batch

Propylene-based resin A: Random polypropylene, PM931M available from SunAllomer Ltd.
Propylene-based resin B: Random polypropylene, EG7FTB available from Japan Polypropylene Corporation
Propylene-based resin C: Random polypropylene, PM731M available from SunAllomer Ltd.
Propylene-based resin D: Random polypropylene, PS320M available from SunAllomer Ltd.
Propylene-based resin E: Random polypropylene, PC630A available from SunAllomer Ltd.
Propylene-based resin F: Block polypropylene, CM688A available from SunAllomer Ltd.
Propylene-based resin G: Homopolymer polypropylene, PM600A available from SunAllomer Ltd.
Ethylene-based resin: metallocene-based C6-LLDPE, FV103 available from Sumitomo Chemical Co., Ltd.

Note that the propylene-based resins A to D contain a nucleating agent.

Non-volatile Liquid with Boiling Point higher than 200°C
Medium-chain triglyceride (MCT)
Surface tension: 28.8 mN/m (23°C)
Viscosity: 33.8 mPa·s (23°C)
Boiling point: 210°C or higher
Flash point: 242°C (reference value)

Note that the surface tension of the liquid used was a value measured using a solid-liquid interface analysis system DropMaster 700 (available from Kyowa Interface Science Co., Ltd.) at 23°C. Note that the density of the liquid required for the surface tension measurement of the liquid was measured using density/specific gravity meter DA-130 (available from Kyoto Electronics Manufacturing Co., Ltd.) at 23°C. Also, the viscosity of the lubricating liquid was a value measured using the tuning-fork vibration method viscometer SV-10 (available from A&D Company, Limited) at 23°C.

Example 1

Using the propylene-based resin A as the matrix resin for producing a master batch and the medium-chain triglyceride (MCT) as the non-volatile liquid with a boiling point higher than 200°C, a twin screw extruder (KZW20TW available from TECHNOVEL CORPORATION) was used to melt-knead, at a cylinder temperature of 220°C, the propylene-based resin A and the MCT to a ratio of 100:25 (parts by mass) to produce a master batch.

Example 2

A twin screw extruder was used to produce a master batch using the same conditions as in Example 1 except that the propylene-based resin B and the MCT had a ratio of 100:25 (parts by mass).

Example 3

A twin screw extruder was used to produce a master batch using the same conditions as in Example 1 except that the propylene-based resin C and the MCT had a ratio of 100:25 (parts by mass).

Example 4

A twin screw extruder was used to produce a master batch using the same conditions as in Example 1 except that the propylene-based resin D and the MCT had a ratio of 100:25 (parts by mass).

Example 5

A twin screw extruder was used to produce a master batch using the same conditions as in Example 1 except that the propylene-based resin A, the ethylene-based resin, and the MCT had a ratio of 85:15:25 (parts by mass).

Example 6

A twin screw extruder was used to produce a master batch using the same conditions as in Example 1 except that the propylene-based resin B, the ethylene-based resin, and the MCT had a ratio of 85:15:25 (parts by mass).

Example 7

A twin screw extruder was used to produce a master batch using the same conditions as in Example 1 except that the propylene-based resin C, the ethylene-based resin, and the MCT had a ratio of 85:15:25 (parts by mass).

Example 8

A twin screw extruder was used to produce a master batch using the same conditions as in Example 1 except that the propylene-based resin D, the ethylene-based resin, and the MCT had a ratio of 85:15:25 (parts by mass).

Comparative Example 1

A twin screw extruder was used to produce a master batch using the same conditions as in Example 1 except that the propylene-based resin E and the MCT had a ratio of 100:25 (parts by mass).

Comparative Example 2

A twin screw extruder was used to produce a master batch using the same conditions as in Example 1 except that the propylene-based resin F and the MCT had a ratio of 100:25 (parts by mass).

Comparative Example 3

A twin screw extruder was used to produce a master batch using the same conditions as in Example 1 except that the propylene-based resin G and the MCT had a ratio of 100:25 (parts by mass).

Comparative Example 4

A twin screw extruder was used to produce a master batch using the same conditions as in Example 1 except that the propylene-based resin C and the MCT had a ratio of 100:43 (parts by mass).

For the master batches produced according to Examples 1 to 8 and Comparative Examples 1 to 4 described above, the results of measuring the melting point Tm and the crystallization temperature Tc using DSC, calculating the subcooling level (Tm - Tc), and measuring the amount of bleeding are listed in Table 1. As can be seen from the results of the surface bleed amount of the master batches, surface bleeding of the blended non-volatile liquid can be suppressed in Examples 1 to 8 more than in Comparative Examples 1 to 4.

Also, polarized photomicrographes using crossed Nicols of the master batches of Example 1 and Comparative Example 1 are illustrated in FIG. 1 and FIG. 2, respectively.

[Table 1-1]

| | Matrix resin (A) | Non-volatile liquid (B) | Master batch (A):(B) (parts by mass) |
|---|---|---|---|
| Example 1 | Propylene-based resin A | Medium -chain triglyceride | 100:25 |
| Example 2 | Propylene-based resin B | Medium -chain triglyceride | 100:25 |
| Example 3 | Propylene-based resin C | Medium -chain triglyceride | 100:25 |
| Example 4 | Propylene-based resin D | Medium -chain triglyceride | 100:25 |
| Example 5 | Propylene-based resin A:Ethylene-based resin 85:15 (parts by mass) | Medium -chain triglyceride | 100:25 |
| Example 6 | Propylene-based resin B:Ethylene-based resin 85:15 (parts by mass) | Medium -chain triglyceride | 100:25 |
| Example 7 | Propylene-based resin C:Ethylene-based resin 85:15 (parts by mass) | Medium -chain triglyceride | 100:25 |
| Example 8 | Propylene-based resin D:Ethylene-based resin 85:15 (parts by mass) | Medium -chain triglyceride | 100:25 |
| Comparative Example 1 | Propylene-based resin E | Medium -chain triglyceride | 100:25 |
| Comparative Example 2 | Propylene-based resin F | Medium -chain triglyceride | 100:25 |
| Comparative Example 3 | Propylene-based resin G | Medium -chain triglyceride | 100:25 |
| Comparative Example 4 | Propylene-based resin C | Medium -chain triglyceride | 100:43 |

[Table 1-2]

| | Crystallization temperature $T_c$ (°C) | Melting point $T_m$ (°C) | $T_m - T_c$ (°C) | Degree of crystallinity (%) | Surface bleed amount (mg) |
|---|---|---|---|---|---|
| Example 1 | 116.8 | 144.8 | 28.0 | 41 | 13.2 |
| Example 2 | 115.6 | 146.1 | 30.5 | 27 | 12.6 |
| Example 3 | 108.9 | 142.6 | 33.7 | 28 | 13.4 |
| Example 4 | 104.4 | 144.8 | 40.4 | 35 | 17.5 |
| Example 5 | 113.0 | 142.7 | 29.7 | 14 | 16.8 |

(continued)

|  | Crystallization temperature $T_c$ (°C) | Melting point $T_m$ (°C) | $T_m - T_c$ (°C) | Degree of crystallinity (%) | Surface bleed amount (mg) |
|---|---|---|---|---|---|
| Example 6 | 115.7 | 145.4 | 29.7 | 19 | 14.2 |
| Example 7 | 109.7 | 142.5 | 32.8 | 20 | 17.4 |
| Example 8 | 102.4 | 145.3 | 42.9 | 29 | 19.1 |
| Comparative Example 1 | 96.8 | 137.8 | 41.0 | 38 | 23.7 |
| Comparative Example 2 | 109.4 | 159.1 | 49.7 | 38 | 22.5 |
| Comparative Example 3 | 107.7 | 159.8 | 52.1 | 46 | 32.4 |
| Comparative Example 4 | 95.2 | 134.5 | 39.3 | 27 | 52.8 |

**Claims**

1. A master batch, comprising:

   a matrix resin containing a propylene-based resin; and
   a non-volatile liquid with a boiling point of 200°C or higher dispersed in the matrix resin, wherein
   temperature conditions represented by relationships below are satisfied
   $T_m < 159°C$,
   $T_c \geq 97°C$, and
   $T_m - T_c < 49°C$
   where $T_c$ is a crystallization temperature indicated, in DSC measurement, as a peak top temperature of an exothermic peak observed on a highest temperature side when cooled to -50°C at a temperature lowering speed of 10°C/min after heat treatment for 5 minutes at 200°C, and $T_m$ is a melting point indicated, in the DSC measurement, as a peak top temperature of a melting peak observed on a highest temperature side when heated from -50°C to 200°C at a temperature rising speed of 10°C/min after being cooled.

2. The master batch according to claim 1, wherein
   the temperature conditions include a relationship of $T_m - T_c < 42°C$ being satisfied.

3. The master batch according to claim 1, wherein
   a nucleating agent is blended in the matrix resin.

4. The master batch according to claim 1, wherein
   a propylene-based resin is a copolymer of propylene and an $\alpha$-olefin.

5. The master batch according to claim 1, wherein
   the non-volatile liquid is a glycerin fatty acid ester or vegetable oil.

6. The master batch according to claim 1, wherein
   10 parts by mass or greater of the non-volatile liquid is contained per 100 parts by mass of the matrix resin containing the propylene-based resin.

7. The master batch according to claim 5, wherein
   a surface bleeding amount of the non-volatile liquid per 1 g of a master batch is 20 mg or less after storage for 60 days in an environment of 60% relative humidity and 22°C.

8. A plastic container, comprising:
   an inner surface formed by a blend of the master batch according to claim 1 and a container-molding resin.

50µm

FIG. 1

FIG. 2

## INTERNATIONAL SEARCH REPORT

| International application No. |
|---|
| PCT/JP2020/033380 |

**A. CLASSIFICATION OF SUBJECT MATTER**
Int.Cl. C08J3/22(2006.01)i, C08J3/20(2006.01)i, C08K5/103(2006.01)i, C08L23/14(2006.01)i
FI: C08J3/22CES, C08J3/20ZCES, C08L23/14, C08K5/103
According to International Patent Classification (IPC) or to both national classification and IPC

**B. FIELDS SEARCHED**

Minimum documentation searched (classification system followed by classification symbols)
Int.Cl. C08J3/00-3/28, C08J99/00, C08L1/00-101/14, C08K3/00-13/08

Documentation searched other than minimum documentation to the extent that such documents are included in the fields searched
Published examined utility model applications of Japan    1922-1996
Published unexamined utility model applications of Japan    1971-2020
Registered utility model specifications of Japan    1996-2020
Published registered utility model applications of Japan    1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 10-202806 A (ITOCHU SAN PLUS KK) 04 August 1998 (1998-08-04), claims, paragraphs [0016]-[0019], [0029]-[0037], examples | 1-8 |
| A | JP 2018-177983 A (TAKEMOTO OIL AND FAT CO., LTD.) 15 November 2018 (2018-11-15), entire text, all drawings | 1-8 |
| A | JP 2018-503751 A (THE PROCTER & GAMBLE COMPANY) 08 February 2018 (2018-02-08), entire text, all drawings | 1-8 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 October 2020 | 02 November 2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

| International application No. |
| --- |
| PCT/JP2020/033380 |

| | | |
| --- | --- | --- |
| JP 10-202806 A | 04 August 1998 | (Family: none) |
| JP 2018-177983 A | 15 November 2018 | (Family: none) |
| JP 2018-503751 A | 08 February 2018 | US 2017/0143561 A1<br>entire text, all drawings<br>EP 3215084 A1<br>CN 107072835 A |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008222291 A
- WO 2014010534 A
- JP S438605 A
- JP 2012072335 A
- JP 2015105308 A